# EUROPÄISCHE PATENTSCHRIFT

(11) **EP 2 316 699 B1**
(45) Veröffentlichungstag und Bekanntmachung des Hinweises auf die Patenterteilung: **16.01.2019**
(21) Anmeldenummer: 10178569.9
(22) Anmeldetag: 23.09.2010
(51) Int. Cl.: B60S 1/08

(54) **Verfahren und Vorrichtung zum Ermitteln des Zustands eines Wischerblatts**
Device and method of determining the condition of a wiper blade
Procédé et dispositif de détermination de l'état d'un balai d'essuie-glace

(30) Priorität: 29.10.2009 DE 102009046132
(43) Veröffentlichungstag der Anmeldung: 04.05.2011
(73) Patentinhaber: Robert Bosch GmbH, 70442 Stuttgart (DE)
(72) Erfinder: Sivanandam, Karthik, 641002, R.S.Puram Coimbatore Tamil Nadu (IN)

(56) Entgegenhaltungen:
- DE-A1- 19 620 320
- KR-A- 20040 107 645
- US-A- 6 057 660

## Beschreibung

Die Erfindung betrifft ein Verfahren zum Ermitteln des Zustands eines Wischerblatts bei einem mittels eines Elektromotors angetriebenen Scheibenwischer, insbesondere ein Front- oder Heckscheibenwischer in einem Kraftfahrzeug. Die Erfindung betrifft ferner eine entsprechende Vorrichtung zum Ermitteln des Zustands des Wischerblatts des Scheibenwischers sowie Scheibenwischeranlage mit einer solchen Vorrichtung.

### Stand der Technik

Mechanische Scheibenwischer kommen in verschiedenen Anwendungen zum Einsatz, beispielsweise in Scheibenwischeranlagen für Front- und Heckscheiben von Kraftfahrzeugen. Bei einem solchen Scheibenwischer wird ein Wischerblatt, das an einem stabilen Wischerarm befestigt ist, über die zu reinigende Scheibe geführt. Der Wischerarm wird dabei in der Regel mittels einen elektrischen Motor angetrieben. Die Motorbewegung kann mittels eines Übersetzungsgetriebes in die gewünschte Wischbewegung umgesetzt werden, wobei der Wischerarm in der Regel zwischen zwei Umkehrpositionen hin und her bewegt wird.

Aufgrund ihrer exponierten Montageposition an der Fahrzeugaußenseite sind Scheibenwischer verschiedenen Umwelteinflüssen ausgesetzt. Dabei wirken einige Umwelteinflüsse schädlich auf das elastische Wischerblattmaterial ein und tragen somit maßgeblich zum Alterungsprozess des Wischerblätter bei. Die Lebensdauer eines Wischerblatts kann beispielsweise durch starke UV-Strahlung oder extreme Witterungsverhältnisse deutlich reduziert werden. Der fortschreitende Alterungsprozess beeinträchtigt zunehmend die Funktionsfähigkeit der Wischblätter, was sich insbesondere in einem ineffektiven Wischverhalten sowie erhöhten Betriebsgeräuschen bemerkbar macht. Um auch bei einer Regenfahrt eine optimale Sicht zu garantieren, sollte der Wechsel der betreffenden Wischerblätter möglichst noch vor dem deutlichen Auftreten der typischen Symptome stattfinden. Zur Ermittlung des richtigen Zeitpunktes für einen Wischerblattwechsel ist daher eine möglichst genaue Kenntnis des aktuellen Zustands der Wischerblätter notwendig.

Die US 6057660 A beschreibt bereits eine Vorrichtung zur Ermittlung des Zustandes eines Wischerblattes. Hierbei wird das Wischergebnis der Wischerblätter mithilfe eines Regendetektors beurteilt und daraus auf den Zustand der betreffenden Wischerblätter geschlossen.

Es ist Aufgabe der Erfindung eine zuverlässige und einfach zu realisierende Bewertung des Zustands eines Wischerblatts bei einem mittels Elektromotor angetriebenen Scheibenwischer bereitzustellen. Diese Aufgabe wird durch ein Verfahren nach Anspruch 1, eine Vorrichtung nach Anspruch 10 sowie eine Scheibenwischeranlage nach Anspruch 14 gelöst. Weitere vorteilhafte Ausführungsformen der Erfindung sind in den abhängigen Ansprüchen angegeben.

Gemäß der Erfindung ist ein Verfahren zum Ermitteln des Zustands eines Wischerblatts bei einem mittels Elektromotor angetriebenen Scheibenwischer vorgesehen, bei dem die Scheibenwischerbewegung erfasst und in Bezug auf das Auftreten ruckartiger Bewegungszustände analysiert wird. Auf Grundlage dieser Analyse findet eine Bewertung des Zustands des Wischerblatts statt. Die Erfindung nutzt zur Beurteilung des Wischerblattzustands einen durch den Alterungsprozess des Wischerblatts verursachten Effekt, nämlich das Auftreten ruckartiger Bewegungen während des Wischvorgangs. Da solche ruckartigen Bewegungen unter anderem auf die unzureichende Elastizität gealterter Gummianteile eines Wischerblatts zurückzuführen sind, stellt die Detektion solcher Bewegungsmuster eine gute Möglichkeit dar, eine sichere Aussage über den Zustand des betreffenden Wischerblatts zu machen.

Dabei wird die Bewegung des Scheibenwischers gemäß einer Ausführungsform aus einem Betriebsparameter des Elektromotors abgeleitet. Durch Analyse der hieraus abgeleiteten Scheibenwischerbewegung können ruckartige Bewegungsmuster zuverlässig erkannt werden. Anhand der dabei gewonnen Informationen kann eine sichere Aussage über den Zustand des Wischerblatts getroffen werden.

In einer Ausführungsform der Erfindung ist vorgesehen, dass solche plötzliche Ausschläge des Betriebsparameters detektiert werden, welche durch ruckartige Bewegungen des Wischerblatts auf der Scheibe verursacht werden. Dabei wird der Zustand des Wischerblatts als unzureichend bewertet, sobald die Anzahl der detektierten Schwankungen einen vorgegebenen Wert überschreitet. Durch die Detektion von Schwankungen des Betriebsparameters lassen sich ruckartige Bewegungen des Scheibenwischers gut ableiten. Die Art solcher Bewegungszustände und die Häufigkeit ihres Auftretens sind gute Indizien für den Alterungszustand des Wischerblatts und lassen sich somit optimal zur Bewertung des Wischerblattzustands verwenden. Anhand der dabei gewonnen Daten kann die Bewertungsvorrichtung eine Prognose über die Alterung des Wischerblatts erstellen und so rechtzeitig bei bevorstehenden Wischerblattwechseln informieren.

Eine weitere Ausführungsform der Erfindung sieht vor, dass solche Ausschläge des Betriebsparameters detektiert werden, die durch ruckartige Bewegungen des Wischerblatts auf der Scheibe verursacht werden, wobei der Zustand des Wischerblatts als unzureichend bewertet wird, sobald die Anzahl der detektierten Ausschläge einen vorgegebenen Wert überschreitet. Solche Bewegungsmuster sind charakteristisch für das alternde Wischerblatt. Hiermit lässt sich eine sichere Aussage über den Wischerblattzustand treffen.

Gemäß einer weiteren Ausführungsform werden für die Bewertung des Zustands des Wischerblatts nur Ausschläge in einer unmittelbar einem Richtungswechsel des Scheibenwischers folgenden Anlaufphase des Scheibenwischers berücksichtigt.

Eine weitere Ausführungsform sieht vor, dass eine Information zum Wechseln des Wischerblatts ausgegeben wird, wenn der Zustand des Wischerblatts als unzureichend bewertet wird. Da der Benutzer rechtzeitig über mögliche Probleme beim Betrieb des Scheibenwischers informiert wird, lässt sich damit die Betriebssicherheit des Fahrzeugs erhöhen.

In einer weiteren Ausführungsform der Erfindung ist vorgesehen, dass als Betriebsparameter der Lastzustand des Elektromotors gemessen wird, wobei zur Bewertung des Zustands des Wischerblatts plötzlich auftretende Schwankungen des Lastzustands herangezogen werden. Anhand des Lastzustands des Motors lässt sich eine besonders gute aussage über die aktuelle Bewegung des Scheibenwischers machen.

Gemäß einer besonders vorteilhaften Ausführungsform der Erfindung wird der Stromverbrauch des Elektromotors gemessen. Dabei werden zur Bewertung des Zustands des Wischerblatts plötzlich auftretende Ausschläge des Stromverbrauchs herangezogen. Da der Stromverbrauch des Scheibenwischermotors unmittelbar mit dem aktuellen Lastzustand in Verbindung steht, lässt sich hiermit eine gute Aussage über die aktuelle Bewegung des Scheibenwischers tätigen. Sofern, wie in modernen Steuergeräten der Fall, bereits Informationen zum aktuellen Strombedarf des Wischermotors zur Verfügung stehen, kann die Erfindung besonders einfach implementiert werden.

Weitere Ausführungsformen der Erfindung sehen ferner vor, dass die Drehzahl bzw. der Drehwinkel des Elektromotors gemessen werden und dass zur Bewertung des Zustands des Wischerblatts plötzliche auftretende Ausschläge der erfassten Parameter herangezogen werden. Auch mithilfe dieser Parameter lässt sich eine ausreichend gute Aussage über die aktuelle Bewegung des Scheibenwischers treffen.

Gemäß der Erfindung ist auch eine Vorrichtung zum Ermitteln des Zustands eines Wischerblatts bei einem mittels eines Elektromotors angetriebenen Scheibenwischer vorgesehen. Die Vorrichtung umfasst dabei eine Messeinrichtung zum Erfassen der Scheibenwischerbewegung anhand wenigstens eines Betriebsparameters des Elektromotors, eine Auswertungseinrichtung zum Analysieren der Scheibenwischerbewegung in Hinblick auf unregelmäßige Bewegungsmuster, sowie eine Bewertungseinrichtung zum Bewerten des Zustands des Wischerblatts auf Grundlage dieser Analyse. Insbesondere ist die Messeinrichtung dabei ausgebildet, wenigstens einen Betriebsparameter des Elektromotors, wie z.B. den Lastzustand, zu messen. Die Auswertungseinrichtung ist dabei ausgebildet, Ausschläge bzw. Schwankungen des Betriebsparameters zu detektieren während die Bewertungseinrichtung ausgebildet ist, den Zustand des Wischerblatts anhand der detektierten Ausschläge zu bewerteten. Eine solche Vorrichtung lässt sich auch einfach in Bestehende Steuergeräte implementieren.

Eine weitere Ausführungsform der Erfindung sieht ferner vor, dass die Messeinrichtung ausgebildet ist, den Stromverbrauch des Elektromotors zu erfassen, dass die Auswertungseinrichtung ausgebildet ist, das Auftreten von Stromspitzen zu detektieren, und dass die Bewertungseinrichtung ausgebildet ist, den Zustand des Wischerblatts abhängig von der Anzahl der auftretenden Stromspitzen zu bewerteten. Da der Stromverbrauch direkt den aktuellen Lastzustand des Wischermotors widerspiegelt, lässt sich durch Beobachtung des Stromverbrauchs eine genaue Aussage über den aktuellen Bewegungszustand des Scheibenwischers machen. Insbesondere machen sich auffällige Bewegungsmuster des Scheibenwischers in entsprechenden Stromsignalen bemerkbar. Sofern, wie in modernen Scheibenwischersteuerungen typischerweise der Fall, der aktuelle Stromverbrauch des Wischermotors der Steuerelektronik ohnehin schon zur Verfügung steht, muss keine separate Strommessung vorgenommen werden. Hierdurch lässt sich die Realisation des erfinderischen Konzepts weiter vereinfachen.

### Offenbarung der Erfindung

Im Folgenden wird die Erfindung anhand von Zeichnungen näher beschreiben. Es zeigen:
Fig. 1 ein auf einer zu wischenden Scheibe bewegtes Wischerblatt eines Scheibenwischers;
Fig. 2 der Scheibenwischer aus der Figur 1 nach einem Richtungswechsel bei einem funktionstüchtigen Wischerblatt;
Fig. 3 der Scheibenwischer aus der Figur 1 nach einem Richtungswechsel bei einem defekten Wischerblatt;
Fig. 4 ein Diagramm mit dem zeitlichen Verlauf des Stromverbrauchs des Scheibenwischermotors beim Wischvorgang mit einem funktionstüchtigen Wischerblatt;
Fig. 5 ein Diagramm mit dem zeitlichen Verlauf des Stromverbrauchs des Scheibenwischermotors beim Wischvorgang mit einem defekten Wischerblatt;
Fig. 6 eine erfindungsgemäße Vorrichtung zum Bewerten des Zustands des Wischerblatts;
Fig. 7 eine erfindungsgemäße Scheibenwischeranlage für ein Fahrzeug umfassend zwei von einem Elektromotor angetriebene Scheibenwischer, wobei die Scheibenwischer jeweils ein auf einer Scheibe aufliegendes Wischerblatt aufweisen.

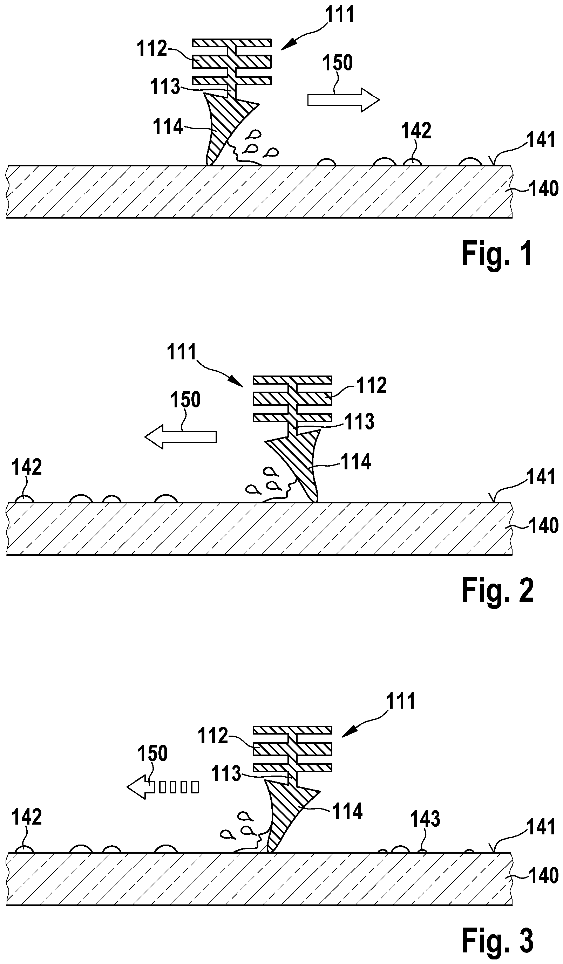

Die **Figur 1** zeigt ein Wischerblatt 111 eines Scheibenwischers 110 beim Wischen über eine Scheibe 140. Das typischerweise an einem Wischerarm (hier nicht gezeigt) des Scheibenwischers 110 befestigte Wischerblatt 111 wird dabei in die mittels des Pfeils 150 angedeutete Wischrichtung über die Scheibe 140 geführt. Das Wischerblatt 111 umfasst typischerweise eine am Wischerarm des Scheibenwischers 110 fixierte obere Wischerblattkomponente 112 sowie eine als Wischerlippe ausgebildete, die eigentliche Wischfunktion ausübende untere Wischerblattkomponente 114. Beide Wischerblattkomponenten 112, 114 sind dabei über einen flexiblen Brückenbereich 113 derart miteinander verbunden, dass die unmittelbar auf der Scheibe 140 aufliegende Wischerlippe 114 gegenüber der fixierten Wischerblattkomponente 112 in einem vorgegebenen Winkelbereich elastisch auslenkbar ist. Aufgrund von Reibungskräften zwischen dem Wischerblatt 111 und der Scheibenoberfläche 141 wird die Wischerlippe 114 während des Wischvorgangs gegenüber der oberen Wischerblattkomponente 112 stets in die der Bewegungsrichtung 150 des Scheibenwischers 110 entgegengesetzte Richtung ausgelenkt. In der hier gezeigten Querschnittdarstellung ist ersichtlich, dass die Auslenkung der Wischerlippe 114 im Uhrzeigersinn erfolgt. Wie hier ferner gezeigt ist, wird die auf der Scheibenoberfläche 141 befindliche Flüssigkeit 142 von der Wischerlippe 114 bei der Wischerbewegung über die Scheibe 140 effektiv mitgenommen.

Nach dem Erreichen einer vorgegebenen Umkehrposition 151, 152 kehrt sich die Bewegungsrichtung des Scheibenwischers 110 um. Aufgrund der Reibungskräfte zwischen der Wischerlippe 114 und der Scheibenoberfläche 141 wird durch den Richtungswechsel des Scheibenwischers 110 ein Umschwenken der flexiblen Wischerlippe 114 in die entgegengesetzte Richtung eingeleitet. Bei einem intakten Wischerblatt 110 schwenkt die Wischerlippe 114 dabei vollständig in die entgegengesetzte Auslenkposition um, so dass sie während der weiteren Scheibenwischerbewegung hinter der oberen Wischerblattkomponente 112 über die Scheibe 140 gezogen wird. Diese Situation ist in der **Figur 2** gezeigt. Die entgegengesetzte Bewegungsrichtung ist dabei mithilfe des Pfeils 150 dargestellt. Im Unterschied zu der in der Figur 1 dargestellten Wischerblattstellung, ist die Wischerlippe 114 gegenüber der oberen Wischerblattkomponente 112 nunmehr entgegen dem Uhrzeigersinn ausgelenkt. Die auf der Scheibe 140 befindliche Flüssigkeit wird nun daher von der linken Wischerlippenseite mitgenommen.

Der Umschwenkvorgang der Wischerlippe 114 kurz nach Erreichen des Scheitelpunktes der Wischerbewegung erfordert ein kurzes Anheben des Scheibenwischerarms von der Scheibe 140, was gegen den Widerstand der Andruckkraft des Scheibenwischerarms erfolgt. Dabei wird die Schwenkbewegung von der elastischen Eigenschaften des Wischerblatts 111 unterstützt, insbesondere von der Rückstellkraft der Wischerlippe 114, die wesentlich durch die Elastizität dieser Komponente 114 bedingt ist. Bei einem ausreichend flexiblen Wischerblatt 111 erfolgt das Umschwenken der Wischerlippe 114 in der Regel ohne Probleme, so dass die Wischbewegung gemäß Figur 2 in die entgegengesetzte Richtung mit einer richtig ausgelenkten Wischerlippe 114 fortgesetzt wird. Ist jedoch die Flexibilität des Wischerblatts 111 und insbesondere die Elastizität der Wischerlippe 114 infolge ausgehärteten Gummimaterials eingeschränkt, so kommt es zunehmend vor, dass die Umschwenkbewegung der Wischerlippe 114 nur unzureichend weit fortschreitet. In diesem Fall wird das Wischerblatt 111 mit einer falsch ausrichteten Wischerlippe 114 über die Scheibe 140 bewegt. Wie in der **Figur 3** gezeigt ist, wird die Wischerlippe 114 in diesem Fall vor dem Wischerblatt hergeschoben, was jedoch recht instabil ist. Die Wischerlippe 114 bleibt bedingt durch Reibungskräfte zwischen Wischerblatt 111 und Scheibenoberfläche 141 immer wieder an der Scheibe 140 hängen, während sich der obere Wischerblattteil 112 weiter dem Wischerarm folgt. Hierdurch wird eine Schwenkbewegung der Wischerlippe 114 zwar eingeleitet. Wenn die Reibungskraft zwischen Wischerblatt 111 und Scheibe 140 nicht ausreicht, um der Wischerlippe 114 bis zum Scheitelpunkt der Schwenkbewegung genügend Abstützung zu bieten, reißt der Kontakt zwischen Wischerlippe 114 und Scheibenoberfläche 141 jedoch immer wieder ab.

Insbesondere in der Anlaufphase, wenn der Scheibenwischer 110 im Scheitelpunkt 151,152 seiner Bewegung aus dem Stand anläuft, kann sich dieser Vorgang mehrfach hintereinander abspielen, was zu einem typischen unregelmäßigen Bewegungsmuster führt. Da zum Umschwenken der Wischerlippe 114 die obere Wischerblattkomponente 112 gegen die Anpresskraft des Scheibenwischers 110 von der Scheibe 140 angehoben werden muss, spürt der Antrieb des Scheibenwischers bei jedem Umschwenkversuch eine entsprechende Zusatzlast. Hingegen spürt der Scheibenwischerantrieb eine plötzlich auftretende Lastabnahme, wenn der Kontakt zwischen Wischerblatt 111 und Scheibenoberfläche 141 abreißt und die Wischerlippe 114 ruckartig in die ursprüngliche Stellung durchrutscht.

Dieser Vorgang wiederholt sich solange, bis das Wischerblatt 111 bei einem erneuten Versuch schließlich über dem Scheitelpunkt der Schwenkbewegung hinaus gelangt und der Wischvorgang mit einer korrekt ausgelenkten Wischerlippe 114 fortgesetzt wird. Durch jeden missglückten Umschwenkversuch ergibt sich eine typische ruckartige Bewegung des Wischerblatts 111 auf der Scheibe 140. Aufgrund der dabei auftretenden Kräfte erfolgt auch die Bewegung des Scheibenwischers 110 entsprechend ruckartig. Die abgehackte Bewegung setzt sich über das Scheibenwischergetriebe auch auf den elektrischen Antrieb 120 des Scheibenwischers fort. Mit zunehmendem Alter des Wischerblatts 111 häufen sich die missglückten Umschlagversuche der Wischerlippe 114. Hierdurch ergibt sich ein unregelmäßiger Wischvorgang, bei dem sich der Scheibenwischer 110 stotternd über die Scheibe 140 bewegt. Diese abgehackte und daher unregelmäßige Bewegung geht häufig mit einem lauten knarrenden Geräusch einher. Ferner nimmt die Wischleistung des Scheibenwischers dramatisch ab, denn bei jedem missglückten Umschlagversuch hinterlässt der Scheibenwischer 110 Flüssigkeitsspuren 143 auf der Scheibe 140.

Es ist daher erfindungsgemäß vorgesehen, die Bewegung des Scheibenwischers 110 anhand geeigneter Betriebsparameter des Elektromotors 120 zu erfassen und im Hinblick auf das Auftreten solcher abgehakter, ruckartiger Bewegungsmuster zu analysieren. Als geeigneter Betriebsparameter kommt hierfür beispielsweise der Stromverbrauch des Scheibenwischermotors 120 in Frage, da sich im Stromverbrauch die durch ruckartige Bewegungen des Scheibenwischerarms am Elektromotor bedingten Lastschwankungen besonders gut erkennen lassen.

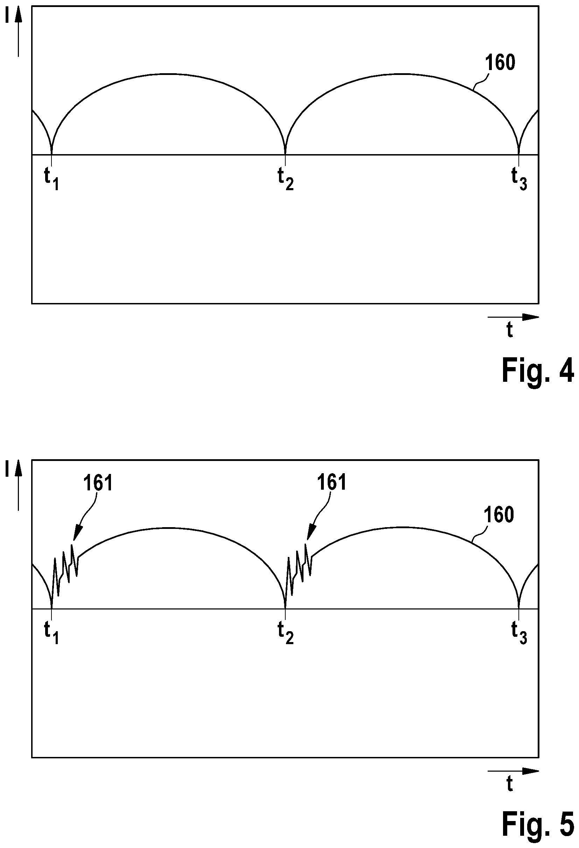

Die **Figur 4** zeigt den Stromverbrauch eines Scheibenwischermotors 140 einer Scheibenwischeranlage während eines Wischzyklus. Die hier gezeigte beispielhafte Stromkurve ist dabei nur schematisiert und stark vereinfacht dargestellt. Die Kurve setzt sich im Wesentlichen aus mehreren Abschnitten zusammen, die jeweils durch ein Kurvenminimum voneinander getrennt sind. Zwei aufeinander folgende Abschnitte ergeben einen vollen Wischzyklus, wobei der erste Abschnitt jeweils die Scheibenwischerbewegung von einem ersten Umkehrpunkt 151, in der Regel die Parkposition, zu einem zweiten Umkehrpunkt 152 repräsentiert. Hingegen stellt der darauf folgende Kurvenabschnitt die Rückbewegung des Scheibenwischers von dem zweiten Umkehrpunkt 152 zum ersten Umkehrpunkt 151 dar.

Die in der Figur 4 gezeigte Kurve weist im Wesentlichen einen gleichmäßigen Verlauf auf. Eine unter realistischen Bedingungen ermittelte Stromkurve weist typischerweise viele Störsignale auf, die auf verschiedenste Faktoren zurückzuführen sind.

Im Unterschied zu der in der Figur 4 gezeigten Stromverbrauchkurve eines Scheibenwischers mit einem funktionstüchtigen Wischerblatt, zeigt die **Figur 5** beispielhaft den Verlauf des Stromverbrauchs eines Scheibenwischers mit einem defekten Wischerblatt während einer Wischperiode. Aufgrund der fehlgeschlagenen Umschwenkversuche der Wischerlippe 114 und der daraus resultierenden Bewegungsschwankungen zeigt die Stromkurve mehrere unregelmäßige Ausschläge, die jeweils auf plötzlich auftretende Schwankungen der Motorlast aufgrund der ruckartigen Bewegungsmuster eines Scheibenwischers zurückzuführen sind. Nur beispielhaft sind hier jeweils drei Stromausschläge 161 dargestellt, die jeweils kurz nach einem Umkehrpunkt 151, 152 zum Beginn eines neuen Bewegungsabschnitts des Scheibenwischers auftreten. Jeder dieser Ausschläge 161 repräsentiert dabei einen missglückten Umschwenkversuch des Scheibenwischerblatts 111. Die hier gezeigten Störsignale 161 sind stark vereinfacht dargestellt. Aufgrund zahlreicher Einflussfaktoren, wie z. B. Elastizitäten und Toleranzen der mechanischen Komponenten des Scheibenwischersystems, können den gemessenen Stromsignalschwankungen 161 weitere Störsignale überlagert sein. Es ist Aufgabe der Auswerteelektronik, die Störsignale entsprechend zu analysieren und die als Indikator für ein gealtertes Wischerblatt dienenden Stromschwankungen sicher zu detektieren. Eine solche Auswerteeinrichtung 132 ist erfindungsgemäß als Teil einer Bewertungsvorrichtung 130 der Scheibenwischeranlage 100 vorgesehen, die beispielsweise innerhalb der vorhandenen Scheibenwischersteuerung implementiert ist.

Grundsätzlich lassen sich die für den Stottereffekt des Scheibenwischers 110 typischen Bewegungsmuster auch anhand anderer Betriebsparameter des Scheibenwischers. Beispielsweise können die Position und die Geschwindigkeit des Scheibenwischers überwacht werden. Ferner kann die Drehgeschwindigkeit des Antriebsmotors, der Drehwinkel und das Ansteuersignal (z.B. PWM-Signal) beobachtet werden, um Informationen über den Bewegungszustand des Scheibenwischers zu erhalten. Es ist sinnvoll, den Bewegungszustand des Scheibenwischers auch anhand mehrerer Betriebsparameter zu überwachen. Beispielsweise könne verschiedene Parameter, wie Drehgeschwindigkeit, Drehwinkel und Motorstrom, erfasst und im Hinblick auf Stotterbewegungen ausgewettet werden. Dies kann beispielsweise mithilfe eines Softwarealgorithmus realisiert werden, ohne dass zusätzliche Komponenten notwendig werden.

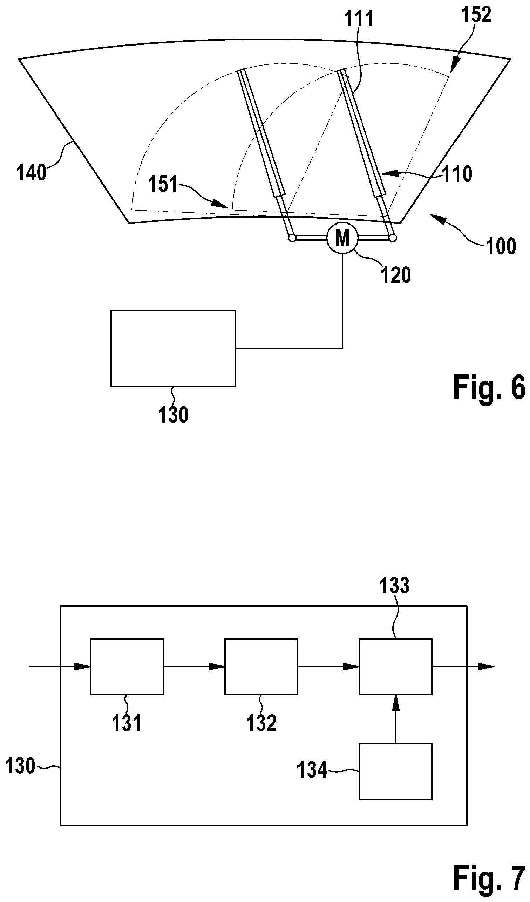

Die **Figur 6** zeigt eine solche Scheibenwischeranlage 100, bei der zwei jeweils ein Wischerblatt 111 aufweisende Scheibenwischer 110 in einer für Kraftfahrzeuge typischen Weise auf einer Frontscheibe 140 nebeneinander angeordnet sind. Jeder der beiden Scheibenwischer 110 ist im Wesentlichen als ein zwischen zwei Umkehrpunkten 151, 152 schwenkbarer Scheibenwischerarm ausgebildet. Als Antrieb für den Scheibenwischer 110 dient ein elektrischer Scheibenwischermotor 120, der über ein entsprechendes Übersetzungsgestänge mit beiden Scheibenwischern 110 verbunden ist. Der Wischermotor 120 wird üblicherweise mittels einer Steuervorrichtung 130 angesteuert. Die Steuerelektronik bestimmt unter anderem die Bewegungsgeschwindigkeit des Scheibenwischers sowie die Dauer eines Intervalls im Falle eines Intervallbetriebs des Scheibenwischers. Erfindungsgemäß ist die Steuereinrichtung 130 ausgebildet, die Bewegung des Scheibenwischers 110 anhand eines Betriebsparameters des Elektromotors zu erfassen, die Scheibenwischerbewegung im Hinblick auf abgehakte Bewegungsmuster zu analysieren und den Zustand des Wischerblatts 111 auf Grundlage dieser Analyse zu bewerten. Vorzugsweise wird hierzu der Stromverbrauch des Elektromotors 120 mithilfe einer Messeinrichtung 131 erfasst. Anhand der gemessenen Stromstärke wird der aktuelle Lastzustand des Scheibenwischermotors 120 ermittelt. Insbesondere werden dabei mithilfe einer Analyseeinrichtung 132 Stromschwankungen detektiert, die auf durch ruckartige Bewegungszustände der Scheibenwischer 110 beruhenden Lastschwankungen im Elektromotor zurückzuführen sind. Anhand der detektierten Lastschwankungen bewertet eine Bewertungseinrichtung 133 den Zustand der Wischerblätter 111 der Scheibenwischer 110. Hierzu kann die Bewertungseinrichtung 133 beispielsweise die Anzahl und Form der in den einzelnen Bewegungsphasen des Scheibenwischers detektierten Lastschwankungen mit vorgegebenen Daten vergleichen und den Zustand des Wischerblatts in Abhängigkeit von diesem Vergleichsergebnis bewerten. Hierzu kann die Bewertungseinrichtung 133 beispielsweise auf Daten zurückgreifen, die in einer Speichereinrichtung 134 abgelegt sind. In Abhängigkeit vom Bewertungsergebnis kann die Bewertungseinrichtung 132 eine entsprechende Information über den Zustand des Wischerblatts 111 ausgeben. Diese Information kann dem Benutzer über entsprechende Einrichtungen (hier nicht gezeigt angezeigt werden. Insbesondere ist es vorteilhaft, den Benutzer optisch oder akustisch über einen bevorstehenden Wischerblattwechsel zu informieren.

Obwohl die oben beschriebenen Ausführungsformen sich auf die Bewertung des Wischerblattzustands anhand bestimmter Bewegungsmuster des Scheibenwischers beziehen, können mithilfe des hier vorgestellten erfinderischen Konzepts auch Aussagen über den Zustand weiterer Komponente der Scheibenwischeranlage getroffen werden. Insbesondere lässt sich anhand der detektierten Bewegungsmuster auch Veränderungen der Scheibenwischereigenschaften erkennen. Beispielsweise können damit veränderte Anpressstärke des Scheibenwischers, durch exzessiven Druck in einer Autowaschanlage verändertes Scheibenwischerblatt oder durch die Verwendung eine falschen Wischerblatts verursachten Änderungen der Scheibenwischergeometrie erkannt werden.

## Patentansprüche

1. Verfahren zum Ermitteln des Zustands eines Wischerblatts (111) bei einem mittels eines Elektromotors (120) angetriebenen Scheibenwischer (110),
**dadurch gekennzeichnet,**
**dass** die Bewegung des Scheibenwischers (110) erfasst und im Hinblick auf unregelmäßige Bewegungsmuster (161) analysiert wird, und
**dass** der Zustand des Wischerblatts (111) auf Grundlage dieser Analyse bewertet wird.

2. Verfahren nach Anspruch 1,
**dadurch gekennzeichnet,**
**dass** die Bewegung des Scheibenwischers (110) durch Messung wenigstens eines Betriebsparameters des Elektromotors (120) erfasst wird,
wobei solche Schwankungen (161) des Betriebsparameters detektiert werden, die durch ruckartige Bewegungen des Wischerblatts (111) auf der Scheibe (140) verursacht werden, und
wobei der Zustand des Wischerblatts (111) als unzureichend bewertet wird, sobald die Anzahl der detektierten Schwankungen (161) einen vorgegebenen Wert überschreitet.

3. Verfahren nach Anspruch 2,
**dadurch gekennzeichnet,**
**dass** zur Bewertung des Zustands des Wischerblatts (111) nur Schwankungen (161) des Betriebsparameters berücksichtigt werden, die in einer unmittelbar einem Richtungswechsel des Scheibenwischers (110) folgenden Anlaufphase des Scheibenwischers (110) auftreten.

4. Verfahren nach einem der vorhergehenden Ansprüche 2 bis 3,
**dadurch gekennzeichnet,**
**dass** als Betriebsparameter der Lastzustand des Elektromotors (120) gemessen wird,
wobei zur Bewertung des Zustands des Wischerblatts (111) plötzlich auftretende Schwankungen (161) des Lastzustands herangezogen werden.

5. Verfahren nach Anspruch 4,
**dadurch gekennzeichnet,**
**dass** der Stromverbrauch des Elektromotors (120) gemessen wird,
wobei zur Bewertung des Zustands des Wischerblatts (111) plötzlich auftretende Ausschläge (161) des Stromverbrauchs herangezogen werden.

6. Verfahren nach einem der vorhergehenden Ansprüche 2 bis 5,
**dadurch gekennzeichnet,**
**dass** Schwankungen der Drehzahl oder des Drehwinkels des Elektromotors (120) detektiert und zur Bewertung des Zustands des Wischerblatts (111) herangezogen werden.

7. Verfahren nach einem der vorhergehenden Ansprüche,
**dadurch gekennzeichnet,**
**dass** eine Information zum Wechseln des Wischerblatts (111) ausgegeben wird, wenn der Zustand des Wischerblatts (111) als unzureichend bewertet wird.

8. Vorrichtung (130) zum Ermitteln des Zustands eines Wischerblatts (111) bei einem mittels eines Elektromotors (120) angetriebenen Scheibenwischer (110), **dadurch gekennzeichnet, dass** sie
- eine Messeinrichtung (131) zum Erfassen der Scheibenwischerbewegung anhand wenigstens eines Betriebsparameters des Elektromotors (120),
- eine Auswertungseinrichtung (132) zum Analysieren der Scheibenwischerbewegung in Hinblick auf unregelmäßige Bewegungsmuster,
- eine Bewertungseinrichtung (133) zum Bewerten des Zustands des Wischerblatts (111) auf Grundlage dieser Analyse umfasst.

9. Vorrichtung nach Anspruch 8,
**dadurch gekennzeichnet,**
**dass** die Messeinrichtung (131) ausgebildet ist, wenigstens einen Betriebsparameter (160) des Elektromotors (120) zu messen,
wobei die Auswertungseinrichtung (132) ausgebildet ist, Schwankungen (161) des Betriebsparameters zu detektieren, die durch ruckartige Bewegungen des Wischerblatts (111) auf der Scheibe (140) verursacht werden, und wobei die Bewertungseinrichtung (133) ausgebildet ist, den Zustand des Wischerblatts (111) anhand der detektierten Schwankungen (161) zu bewerteten.

10. Vorrichtung nach Anspruch 9,
**dadurch gekennzeichnet,**
**dass** die Messeinrichtung (131) ausgebildet ist, den Lastzustand (160) des Elektromotors (120) zu erfassen,
wobei die Auswertungseinrichtung (132) ausgebildet ist, plötzliche Schwankungen (161) des Lastzustands zu detektieren, und
wobei die Bewertungseinrichtung (133) ausgebildet ist, den Zustand des Wischerblatts (111) anhand der detektierten Lastschwankungen (161) zu bewerteten.

11. Vorrichtung nach Anspruch 9 oder 10,
**dadurch gekennzeichnet,**
**dass** die Messeinrichtung (131) ausgebildet ist, den Stromverbrauch (160) des Elektromotors (120) zu erfassen,
wobei die Auswertungseinrichtung (132) ausgebildet ist, das Auftreten von Stromspitzen (161) zu detektieren, und
wobei die Bewertungseinrichtung (133) ausgebildet ist, den Zustand des Wischerblatts (111) abhängig von der Anzahl der auftretenden Stromspitzen (161) zu bewerteten.

12. Scheibenwischeranlage für ein Fahrzeug umfassend:
- einen Scheibenwischer (110) mit wenigstens einem Wischerblatt (111),
- einen Elektromotor (120) zum Antreiben des Scheibenwischers (110), und
- eine Vorrichtung (130) zum Ermitteln des Zustands des Wischerblatts (111) nach einem der vorhergehenden Ansprüche 8 bis 11.

## Claims

1. Method for determining the condition of a wiper blade (111) in a windscreen wiper (110) driven by means of an electric motor (120),
**characterized in that**
the movement of the windscreen wiper (110) is detected and analysed with regard to irregular movement patterns (161), and
**in that** the condition of the wiper blade (111) is assessed on the basis of this analysis.

2. Method according to Claim 1,
**characterized in that**
the movement of the windscreen wiper (110) is detected by measuring at least one operating parameter of the electric motor (120),
wherein those fluctuations (161) of the operating parameter which are caused by jerky movements of the wiper blade (111) on the window (140) are detected, and
wherein the condition of the wiper blade (111) is judged to be inadequate as soon as the number of fluctuations (161) detected exceeds a predefined value.

3. Method according to Claim 2,
**characterized in that**
to assess the condition of the wiper blade (111), account is taken only of fluctuations (161) of the operating parameter which occur in a starting phase of the windscreen wiper (110) that immediately follows a change in the direction of the windscreen wiper (110).

4. Method according to one of the preceding Claims 2 and 3,
**characterized in that**
the load state of the electric motor (120) is measured as the operating parameter, wherein, to assess the condition of the wiper blade (111), fluctuations (161) of the load state which occur suddenly are used.

5. Method according to Claim 4,
**characterized in that**
the power consumption of the electric motor (120) is measured, wherein, to assess the condition of the wiper blade (111), excursions (161) of the power consumption which occur suddenly are used.

6. Method according to one of the preceding claims 2 to 5,
**characterized in that**
fluctuations of the rotational speed or the rotational angle of the electric motor (120) are detected and used to assess the condition of the wiper blade (111).

7. Method according to one of the preceding Claims,
**characterized in that**
information relating to changing the wiper blade (111) is output when the condition of the wiper blade (111) is judged to be inadequate.

8. Device (130) for determining the condition of a wiper blade (111) in a windscreen wiper (110) driven by means of an electric motor (120),
**characterized in that**
it comprises
- a measuring unit (131) for detecting the windscreen wiper movement by using at least one operating parameter of the electric motor (120),
- an evaluation unit (132) for analysing the windscreen wiper movement with regard to irregular movement patterns,
- an assessment unit (133) for assessing the condition of the wiper blade (111) on the basis of this analysis.

9. Device according to Claim 8,
**characterized in that**
the measuring unit (131) is designed to measure at least one operating parameter (160) of the electric motor (120),
wherein the evaluation unit (132) is designed to detect fluctuations (161) of the operating parameter which are caused by jerky movements of the wiper blade (111) on the window (140), and wherein the assessment unit (133) is designed to assess the condition of the wiper blade (111) by using the fluctuations (161) detected.

10. Device according to Claim 9,
**characterized in that**
the measuring unit (131) is designed to detect the load state (160) of the electric motor (120), wherein the evaluation unit (132) is designed to detect sudden fluctuations (161) of the load state, and
wherein the assessment unit (133) is designed to assess the condition of the wiper blade (111) by using the load fluctuations (161) detected.

11. Device according to Claim 9 or 10,
**characterized in that**
the measuring unit (131) is designed to detect the power consumption (160) of the electric motor (120),
wherein the evaluation unit (132) is designed to detect the occurrence of power peaks (161), and wherein the assessment unit (133) is designed to assess the condition of the wiper blade (111) on the basis of the number of power peaks (161) that occur.

12. Windscreen wiper system for a vehicle, comprising:
- a windscreen wiper (110) having at least one wiper blade (111),
- an electric motor (120) for driving the windscreen wiper (110), and
- a device (130) for determining the condition of the wiper blade (111) according to one of the preceding Claims 8 to 11.

## Revendications

1. Procédé de détermination de l'état d'un balai d'essuie-glace (111) dans un essuie-glace (110) entraîné au moyen d'un moteur électrique (120), **caractérisé en ce que** l'on détecte le mouvement de l'essuie-glace (110) et on l'analyse par rapport à des figures de mouvement irrégulières (161), et **en ce que** l'on évalue l'état du balai d'essuie-glace (111) sur la base de cette analyse.

2. Procédé selon la revendication 1, **caractérisé en ce que** l'on détecte le mouvement de l'essuie-glace (110) par la mesure d'au moins un paramètre de fonctionnement du moteur électrique (120), dans lequel on détecte les fluctuations (161) du paramètre de fonctionnement, qui sont causées par des mouvements saccadés du balai d'essuie-glace (111) sur la vitre (140), et dans lequel on évalue l'état du balai d'essuie-glace (111) comme défectueux, dès que le nombre des fluctuations détectées (161) dépasse une valeur prédéterminée.

3. Procédé selon la revendication 2, **caractérisé en ce que**, pour évaluer l'état du balai d'essuie-glace (111), on ne tient compte que des fluctuations (161) du paramètre de fonctionnement, qui se produisent dans une phase de démarrage de l'essuie-glace (110) qui suit immédiatement un changement de direction de l'essuie-glace (110).

4. Procédé selon une des revendications précédentes 2 à 3, **caractérisé en ce que** l'on mesure comme paramètre de fonctionnement l'état de charge du moteur électrique (120), dans lequel, pour l'évaluation de l'état du balai d'essuie-glace (111), on considère les fluctuations (161) de l'état de charge qui se produisent de façon soudaine.

5. Procédé selon la revendication 4, **caractérisé en ce que** l'on mesure la consommation électrique du moteur électrique (120), dans lequel, pour l'évaluation de l'état du balai d'essuie-glace (111), on considère des déviations (161) de la consommation électrique qui se produisent de façon soudaine.

6. Procédé selon l'une quelconque des revendications précédentes 2 à 5, **caractérisé en ce que** l'on détecte des fluctuations de la vitesse de rotation ou de l'angle de rotation du moteur électrique (120) et on les utilise pour l'évaluation de l'état du balai d'essuie-glace (111) .

7. Procédé selon l'une quelconque des revendications précédentes, **caractérisé en ce que** l'on envoie une recommandation de changer le balai d'essuie-glace (111), lorsque l'état du balai d'essuie-glace (111) est jugé défectueux.

8. Dispositif (130) de détermination de l'état d'un balai d'essuie-glace (111) dans un essuie-glace (110) entraîné au moyen d'un moteur électrique (120), **caractérisé en ce qu'**il comprend
- un dispositif de mesure (131) pour détecter le mouvement de l'essuie-glace à l'aide d'au moins un paramètre de fonctionnement du moteur électrique (120),
- un dispositif d'analyse (132) pour analyser le mouvement de l'essuie-glace par rapport à des figures de mouvement irrégulières,
- un dispositif d'évaluation (133) pour évaluer l'état du balai d'essuie-glace (111) sur la base de cette analyse.

9. Dispositif selon la revendication 8, **caractérisé en ce que** le dispositif de mesure (131) est configuré pour mesurer au moins un paramètre de fonctionnement (160) du moteur électrique (120), dans lequel le dispositif d'analyse (132) est configuré pour détecter des fluctuations (161) du paramètre de fonctionnement, qui sont causées par des mouvements saccadés du balai d'essuie-glace (111) sur la vitre (140), et dans lequel le dispositif d'évaluation (133) est configuré pour évaluer l'état du balai d'essuie-glace (111) sur la base des fluctuations détectées (161).

10. Dispositif selon la revendication 9, **caractérisé en ce que** le dispositif de mesure (131) est configuré pour détecter l'état de charge (160) du moteur électrique (120), dans lequel le dispositif d'analyse (132) est configuré pour détecter des fluctuations soudaines (161) de l'état de charge, et dans lequel le dispositif d'évaluation (133) est configuré pour évaluer l'état du balai d'essuie-glace (111) à l'aide des fluctuations de charge détectées (161).

11. Dispositif selon la revendication 9 ou 10, **caractérisé en ce que** le dispositif de mesure (131) est configuré pour détecter la consommation électrique (160) du moteur électrique (120), dans lequel le dispositif d'analyse (132) est configuré pour détecter la survenance de pics de courant (161), et dans lequel le dispositif d'évaluation (133) est configuré pour évaluer l'état du balai d'essuie-glace (111) en fonction du nombre des pics de courant survenus (161).

12. Installation d'essuie-glace pour un véhicule, comprenant:
- un essuie-glace (110) avec au moins un balai d'essuie-glace (111),
- un moteur électrique (120) pour entraîner l'essuie-glace (110), et
- un dispositif (130) pour déterminer l'état du balai d'essuie-glace (111) selon l'une quelconque des revendications 8 à 11.
